Europäisches Patentamt

European Patent Office

Office européen des brevets

(19)

(11) Veröffentlichungsnummer: **0 066 271**
**B1**

(12) # EUROPÄISCHE PATENTSCHRIFT

(45) Veröffentlichungstag der Patentschrift:
11.09.85

(51) Int. Cl.⁴: **G 01 S 7/28**

(21) Anmeldenummer: **82104673.7**

(22) Anmeldetag: **27.05.82**

(54) **Puls-Radarempfänger mit Zielmittenbestimmung.**

(30) Priorität: **03.06.81 DE 3122071**

(43) Veröffentlichungstag der Anmeldung:
**08.12.82 Patentblatt 82/49**

(45) Bekanntmachung des Hinweises auf die Patenterteilung:
**11.09.85 Patentblatt 85/37**

(84) Benannte Vertragsstaaten:
**FR GB IT NL**

(56) Entgegenhaltungen:
**EP - A - 0 014 495**
**DE - A - 2 318 856**
**DE - A - 2 351 511**
**DE - A - 2 412 024**
**DE - B - 1 035 709**
**DE - B - 2 002 149**
**DE - B - 2 244 997**

**Proc. IEE 107B (1960) Suppl. 19 (März) 36-46**

(73) Patentinhaber: **Siemens Aktiengesellschaft, Berlin und München Wittelsbacherplatz 2, D-8000 München 2 (DE)**

(72) Erfinder: **Hauptmann, Rudolf, Dipl.-Ing., Augustenfelderstrasse 23, D-8060 Dachau (DE)**
Erfinder: **Hönicke, Robert Dipl.-Ing., Vordere Felstrasse 3, D-7900 Ulm 10 (DE)**

**Beschreibung**

Die Erfindung bezieht sich auf einen Puls-Radarempfänger mit einer Schaltung zur digitalen Bestimmung der Zielmitte von Echosignalen in Entfernung und Winkel (Azimut).

Es ist bekannt (Proceedings IEE 107 B, 1960, SUPPL. 19, März, Seiten 36 bis 46), bei Radargeräten einen Schwellenwert vorzusehen und bei Überschreiten dieses Schwellenwertes eine Zählschaltung in Tätigkeit zu setzen. Die Zählschaltung wird beim Überschreiten des Schwellenwertes angehalten und es läßt sich aus der Zeitdauer, während der die Überschreitung des Schwellenwertes aufgetreten war, die Mitte des Zielechosignals bestimmen. Auf diese Weise können zwar bei relativ großem schaltungstechnischen Aufwand gegenüber der Unschärfe bei sehr breiten Echosignalen Verbesserungen in der Zielmittenbestimmung erzielt werden, wobei jedoch trotzdem relativ große Fehler auftreten. Diese Fehler sind vor allem dadurch bedingt, daß der Schwellenwert sehr nahe am Rauschpegel liegen muß und deshalb sowohl das Überschreiten des Schwellenwertes als auch das Unterschreiten des Schwellenwertes sehr stark von den jeweiligen Rauschspannungen im Zeitbereich des Über- bzw. Unterschreitens abhängen.

Aus der DE-AS 1 035 709 ist es bekannt, zur vollständigen Ortung eines Objektes eine Entfernungsmessung und eine Winkelmessung (Azimut) gleichzeitig durchzuführen. Zur verbesserten Erfassung bzw. Auswertung werden mittels einer Reihe gleicher Speichereinrichtungen einzelne Spannungswerte von Echosignalen integrierend gespeichert. Hierzu ist die Öffnungszeit der Speichereinrichtungen entsprechend zu wählen. Um bei relativ langen Echosignalen das Maximum zu bestimmen, wird unter anderem vorgeschlagen, das Differentiationsverfahren oder eine Differenzbildung anzuwenden. Hierbei werden die in bekannten Speichereinrichtungen enthaltenen Ladespannungen gegeneinander geschaltet und der Vorzeichenwechsel als Markierung der Zielmitte benutzt. Diese Art der Zielmittenbestimmung, z. B. im Azimut, hat gegenüber der Methode nach der vorgenannten Literaturstelle den Vorteil, daß im Gegensatz zur Schwellenwert-Zielmittenbestimmung die Rauschspannungsverteilungen im Bereich der sehr niedrigen Schwellenspannung nicht in die Genauigkeit eingehen und die Zielmittenbestimmung mit zunehmendem Signal-Rausch-Abstand immer genauer wird.

Der Erfindung liegt die Aufgabe zugrunde, eine verbesserte digitale Zielmittenbestimmung anzugeben, bei der ausgehend von einer bekannten Anordnung zur Zielmittenbestimmung im Azimut, z. B. nach der deutschen Patentschrift 2 244 997, mit geringem Aufwand eine Zielschärfung der Entfernung erzielbar ist.

Gemäß der Erfindung wird diese Aufgabe dadurch gelöst, daß die Echosignale, die am Ausgang einer Videoschwelle als Binärsignal in einem bestimmten Entfernungskanal zur Verfügung stehen, zur Zielmittenbestimmung in der Entfernung unter Abfrage zum Zeitpunkt des azimutalen Zielendes im betreffenden Entfernungskanal der durch die Radarimpulse erzielten azimutalen Trefferanzahl in den beiden benachbarten Entfernungskanälen mit einem Normziel korreliert werden, das von drei aufeinander folgenden Entfernungskanälen gebildet ist, von denen der mittlere Entfernungskanal zum Zeitpunkt seines azimutalen Zielendes eine größere azimutale Trefferzahl aufweist als die jeweils benachbarten Entfernungskanäle, und die Schaltung bei positivem Korrelationsergebnis ein Signal abgibt, das den betreffenden Entfernungskanal als radiale Zielmitte kennzeichnet.

Eine derartige Korrelation von mit Zielen behafteten Entfernungskanälen mit einem definierten Normziel hat den besonderen Vorteil, daß auch ineinander verschachtelte Ziele aufgelöst und angezeigt werden können. Die dabei entfernungs- und winkelrichtig darstellbare Anzahl von Zielen ist nur durch die Pulsfolgefrequenz und die Anzahl der Entfernungskanäle beschränkt.

Die Erfindung und weitere Einzelheiten der Erfindung werden anhand der Figuren näher beschrieben.

Es zeigt

Fig. 1 eine Darstellung der Entfernungskanäle und Winkelinkremente auf einem Radarbildschirm,

Fig. 2 ein vereinfachtes Blockschaltbild eines Puls-Radarempfängers nach der Erfindung,

Fig. 3 ein Prinzipschaltbild für eine digitale Entfernungsmittenbestimmung eines Zieles gemäß der Erfindung,

Fig. 4 bis 7 Beispiele verschiedener Zielkombinationen, deren Auflösung durch Zielmittenbestimmung gemäß der Erfindung erfolgt.

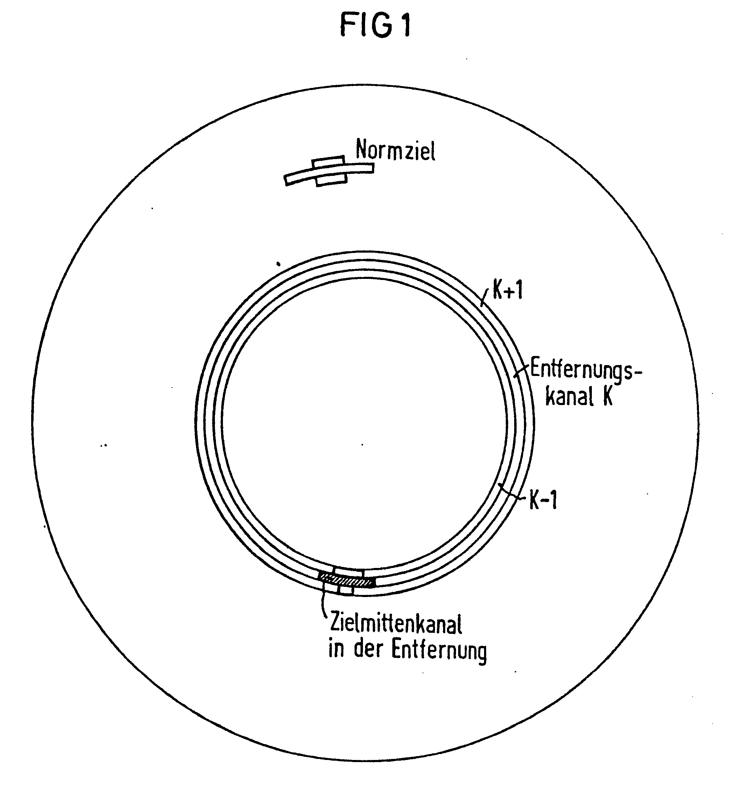

Im oberen Teil des Bildschirmes nach Fig. 1 ist ein für die Zielmittenbestimmung nach der Erfindung benutztes Normziel dargestellt. Das Normziel belegt einen mittleren Entfernungskanal mit einer großen Trefferzahl (Azimut) und zwei benachbarte Entfernungskanäle mit kleinerer Trefferzahl, d. h. mit einem entsprechend kleineren Azimut. Im mittleren Teil des Schirmbildes sind drei Entfernungskanäle dargestellt. Der mittlere Entfernungskanal ist mit K, der benachbarte außenliegende Entfernungskanal mit K+1 und der innenliegende benachbarte Entfernungskanal mit K−1 bezeichnet. Ein im Bereich dieser drei Entfernungskanäle liegendes Ziel, das die für eine Korrelation mit dem Normziel erforderlichen Bedingungen erfüllt, und dessen Zielmittenkanal in der Entfernung durch Schraffur gekennzeichnet ist, soll den Vorgang der Zielmittenbestimmung in der Entfernung näher erläutern. Voraussetzung für die erfindungsgemäße Zielschärfung in der Entfernung ist eine Zielmittenbestimmung im Azimut, die nach einer bekannten Methode erfolgen kann. Beim Auftreten eines Zielechos wird z. B. der Zielanfangswinkel im entsprechenden Entfernungskanal abgespeichert. Bei andauernder Zielaussage im gleichen Entfernungskanal während der folgenden Pulsfolgefrequenz-Perioden wird laufend die aktuelle Zielmitte errechnet, indem zwischen Anfangswinkel und dem augenblicklichen Winkel das arithmetische Mittel gebildet wird. Bei Zielende steht in diesem Fall sofort der aktuelle Zielmittenwinkel z. B. als paralleles n-Bit-Wort zur Verfügung.

Bei einer anderen Möglichkeit der Zielmittenbestimmung im Azimut kann z. B. ein Winkelzähler verwendet werden, der bei Auftreten eines Zielechos in dem entsprechenden Entfernungskanal zu zählen beginnt. Mit jeder Periode der Pulsfolgefrequenz zählt der Zähler bei einem weiter andauernden Ziel um eine Einheit weiter. Der Zähler kann so ausgebildet sein, daß er nach dem Zielende auf die doppelte Zählgeschwindigkeit umschaltet und bis zu einem vorgegebenen maximalen Zählwert $Z_{max}$, der durch eine maximale Zielbreite im Azimut vorgegeben ist, hochzählt. Bei Erreichen des maximalen Wertes $Z_{max}$ kann ein Impuls ausgegeben werden, der einerseits als Zielmittenimpuls im Azimut weiterverarbeitet und andererseits als Rücksetz-Impuls für den Winkelzähler verwendet wird. Unabhängig von der Zielbreite im Azimut stellt dabei die Winkeldifferenz von der Zielmitte bis zum Erreichen des vorgegebenen Zählwertes $Z_{max}$ des Winkelzählers einen konstanten Wert dar, der auf einfache Weise eliminiert werden kann.

In beiden Fällen der oben dargestellten azimutalen Zielmittenbestimmung liegt bei Vorhandensein eines Zieles in jedem Entfernungskanal und bei jeder Periode der Pulsfolgefrequenz eine bestimmte Zahlengröße in Form eines Zählerstandes in einem augenblicklich betrachteten Entfernungskanal K vor. Die Höhe des Zählerstandes ist dabei jeweils von der Breite des Zieles im Azimut abhängig. Der Zählerstand im Kanal K wird mit den Zählerständen der beiden Nachbarkanäle verglichen, um eine Korrelation mit einem fiktiven Normziel durchzuführen. Eine Zielmitte der Entfernung wird nur für denjenigen Entfernungskanal K ausgegeben, der im Zeitpunkt des azimutalen Zielendes die Bedingungen erfüllt, daß seine Trefferzahl bzw. sein Zählerstand gleich oder größer ist als der im benachbarten außenliegenden Entfernungskanal (K + 1) und daß ferner seine Trefferzahl bzw. der Zählerstand größer ist als im benachbarten innenliegenden Entfernungskanal (K − 1).

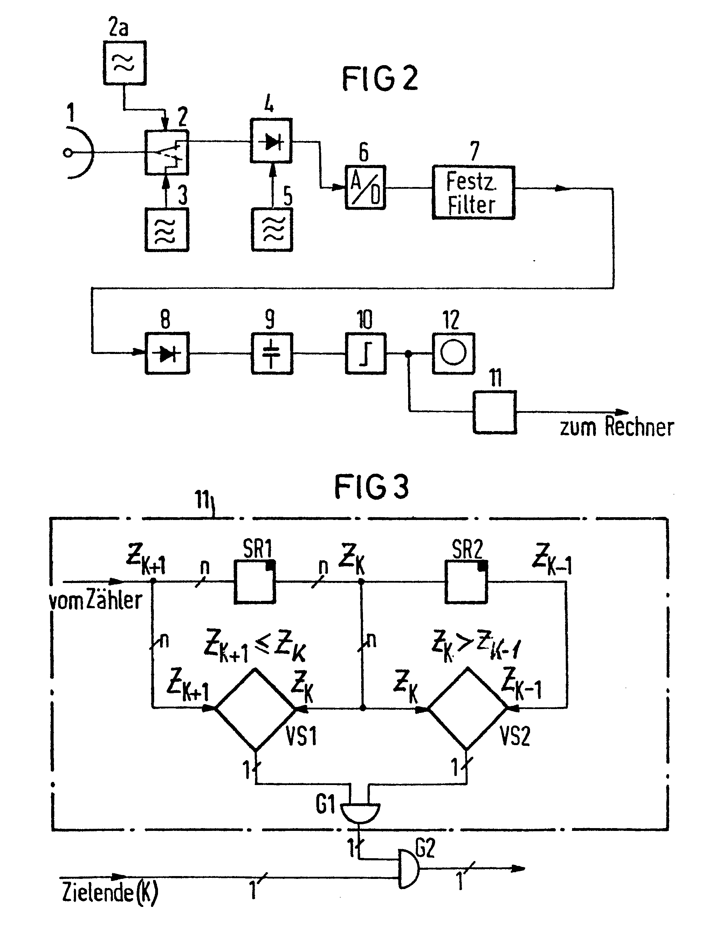

Ein vereinfachtes Blockschaltbild eines Puls-Radarempfängers mit einer Schaltung zur Zielmittenbestimmung im Azimut und in der Entfernung ist in der Fig. 2 dargestellt. Der Antenne 1 eines Puls-Radarempfängers ist ein Sende-Empfangs-Schalter 2 und ein Sender 3 nachgeschaltet. Die Umschaltung des Sende-Empfangs-Schalters 2 erfolgt durch einen Taktgeber 2a. Im Empfangsteil ist ein Mischer 4 vorgesehen, dessen Überlagerungsoszillator mit 5 bezeichnet ist. Die Echosignale der einzelnen Ziele werden durch geeignete Schaltungen getrennt verarbeitet, wobei z. B. Entfernungskanäle benutzt werden können. Ein einzelner derartiger einer bestimmten Entfernung zugeordneter Zweig ist in der Fig. 2 dargestellt. Die Echosignale nur eines in einer bestimmten Entfernung liegenden Zieles gelangen in einen bestimmten Entfernungskanal, ohne daß eine Vermischung mit Echosignalen anderer Ziele eintreten kann. Auf die Mischstufe 4 folgt bei digitaler Weiterverarbeitung im nachfolgenden Signalverarbeitungsbereich ein Analog-Digital-Wandler 6, an den sich ein digital arbeitendes Festzeichenfilter 7 anschließt. Das Videosignal wird einer Gleichrichteranordnung 8 zugeführt, welcher eine Speicher- und Tiefpaßschaltung 9 nachgeschaltet ist. Signale, welche die Schwelle 10 überschreiten, werden sowohl einem Auswertegerät z. B. einem Sichtgerät 12 zugeführt, als auch einer Schaltung zur Zielmittenbestimmung 11 gemäß der Erfindung. Die Zielmitten werden z. B. an einen Rechner weitergeleitet.

In Fig. 3 ist das Prinzipschaltbild zur digitalen Entfernungsmittenbestimmung als Teil der Schaltung 11 dargestellt. Von einem Zähler wird im Kanaltakt von den aufeinanderfolgenden Entfernungskanälen die azimutale Trefferzahl als ein n-Bit-Parallelwort an den Eingang zur Zielmittenbestimmung geliefert. Die angelieferten Informationen verzweigen sich am Eingang der Schaltung zur Zielmittenbestimmung auf einen ersten Schaltungszweig, der in Hintereinanderschaltung zwei n-Bit-parallele Schieberegister SR1, SR2 mit je einer einkanaligen Verzögerung enthält. Der zweite Schaltungszweig führt an einen n-Bit-parallelen Eingang einer ersten Vergleichsschaltung VS1. Die n-Bit-parallele Verbindung vom Ausgang des ersten Schieberegisters SR1 zum Eingang des zweiten Schieberegisters SR2 weist eine n-Bit-parallele Abzweigung auf, die sowohl an einen zweiten Eingang der ersten Vergleichsschaltung VS1 als auch an einen ersten Eingang einer zweiten Vergleichsschaltung VS2 angeschlossen ist. Der n-Bit-parallele Ausgang des Schieberegisters SR2 ist mit dem n-Bit-parallelen zweiten Eingang der zweiten Vergleichsschaltung VS2 verbunden. Der binäre Ausgang beider Vergleichsschaltungen VS1, VS2 ist an je einen Eingang eines UND-Gatters G1 geführt, dessen Ausgang mit einem von zwei Eingängen eines zweiten UND-Gatters G2 verbunden ist. Dem zweiten Eingang des UND-Gatters G2 wird ein Zielende-Impuls aus der Zielmittenbestimmung im Azimut zugeführt. Am Ausgang des UND-Gatters G2 steht dann eine Zielmittenaussage in der Entfernung zur Verfügung.

Um mit der beschriebenen Schaltung die Korrelation eines Zieles, das durch Treffermeldungen in den Entfernungskanälen K − 1, K, K + 1 gegeben ist, mit dem fiktiven Normziel festzustellen, müssen Vergleichsoperationen des Entfernungskanals K mit den beiden benachbarten Entfernungskanälen K + 1 und K − 1 durchgeführt werden. Wenn der Entfernungskanal K auf das Vorliegen einer radialen Zielmitte untersucht werden soll, muß der Zählerstand bzw. die Trefferzahl des vorhergehenden Entfernungskanals (K—1) als n-Bit-Parallelwort im Schieberegister SR2 und der Zählerstand des Entfernungskanals K ebenfalls als n-Bit-Parallelwort im Schieberegister SR1 gespeichert sein. Gleichzeitig steht am Eingang des Schieberegisters SR1 das n-Bit-Parallelwort des Zählerstandes des Entfernungskanals K+1 an. Zu diesem Zeitpunkt wird durch die Vergleichsschaltungen VS1 und VS2 überprüft, ob die Bedingungen für das Vorliegen eines mit dem Normziel korrelierenden Zieles vorliegen. An den beiden Eingängen der ersten Vergleichsschaltung VS1 liegen als n-Bit-Parallelwort die Zählerstände des Entfernungskanals K und des Entfernungskanals K+1 an. Gleichzeitig erhalten die Eingänge der zweiten Vergleichsschaltung VS2 die n-Bit-Parallelworte der Zählerstände des Entfernungskanals K und des Entfernungskanals K—1. Bei Erfüllung der Bedingung $Z_{K+1} \leq Z_K$ an der Vergleichsschaltung VS1 liefert der Ausgang mit Logikpegel ein H-Signal. Entsprechend liefert die Vergleichsschaltung VS2 ebenfalls ein H-Signal, wenn die Bedingung $Z_K > Z_{K-1}$ erfüllt ist. Am Ausgang des UND-Gatters G1 erscheint immer dann ein logisches H-Signal, wenn die Bedingung $Z_{K+1} \leq Z_K > Z_{K-1}$ erfüllt ist. Wird diese Bedingung zum Zeitpunkt des azimutalen Zielendes im Kanal K erfüllt, ist der Kanal K der radiale Zielmittenkanal. Um diese Entscheidung zu treffen, werden das Ausgangssignal des UND-Gatters G1 und der azimutale Zielendeimpuls dem UND-Gatter G2 zugeführt. Am Ausgang des UND-Gatters G2 erhält man dadurch einen einzigen Impuls für die Dauer eines Entfernungstores, der denjenigen Kanal K als radiale Zielmitte kennzeichnet, der beim azimutalen Ende der Schwellenüberschreitung, bezogen auf seine Nachbarkanäle, die längste azimutale Zielausdehnung aufweist.

Für diesen ausgewählten Kanal K kann dann die azimutale Zielmitte errechnet bzw. die schon errechnete azimutale Zielmitte ausgegeben werden.

Die Zahl n, welche die Anzahl der parallelen Leitungen in der Schaltung zur Zielmittenbestimmung angibt, ist von der maximalen Zielbreite x im Azimut abhängig. Wird beispielsweise eine maximale Zielbreite x von 64 Perioden der Pulsfolgefrequenz angenommen, dann ergibt sich für die Anzahl

$$n = \ln x; \qquad n = \ln 64; \qquad n = 6.$$

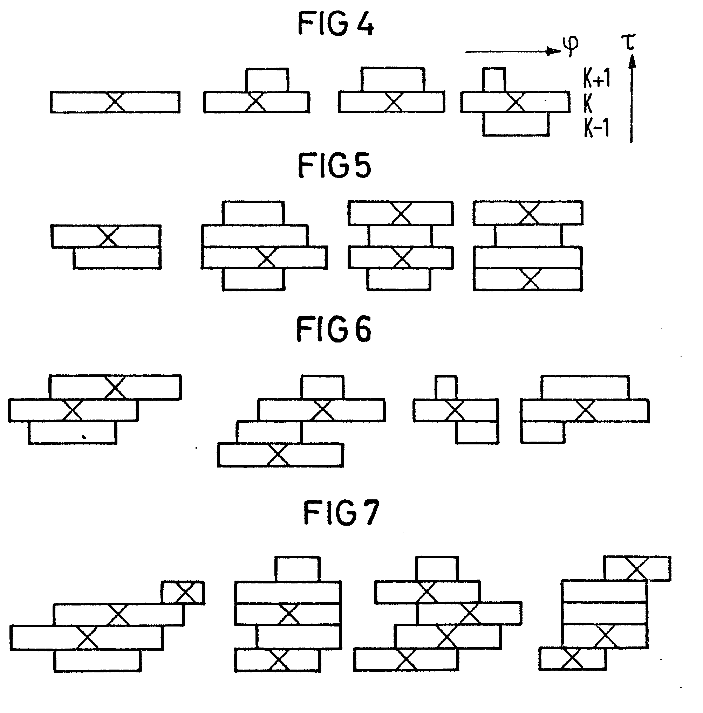

In Fig. 4 sind Beispiele für die Darstellung einfacher Ziele in einem, zwei oder drei Entfernungskanälen angegeben, wobei jeweils die Zielmitte durch ein X gekennzeichnet ist.

Die Fig. 5 zeigt Beispiele für die Darstellung zweier benachbarter Ziele unter gleichem Azimutwinkel.

Fig. 6 zeigt Beispiele einer Darstellung zweier benachbarter Ziele unter verschiedenem Azimutwinkel, die mit der erfindungsgemäßen Schaltung aufgelöst sind.

In der Fig. 7 sind schließlich mehrere Ziele unter gleichem und verschiedenem Azimutwinkel mit Zielmittenangaben dargestellt.

## Patentansprüche

1. Puls-Radarempfänger mit einer Schaltung (11) zur digitalen Bestimmung der Zielmitte von Echosignalen in Entfernung und Winkel (Azimut), dadurch gekennzeichnet, daß die Echosignale, die am Ausgang einer Videoschwelle (10) als Binärsignal in einem bestimmten Entfernungskanal zur Verfügung stehen, zur Zielmittenbestimmung (X) in der Entfernung unter Abfrage zum Zeitpunkt des azimutalen Zielendes im betreffenden Entfernungskanal (K) der durch die Radarimpulse erzielten azimutalen Trefferanzahl ($Z_{K-1}$, $Z_{K+1}$) in den beiden benachbarten Entfernungskanälen (K—1, K+1) mit einem Normziel korreliert werden, das von drei aufeinander folgenden Entfernungskanälen gebildet wird, von denen der mittlere Entfernungskanal zum Zeitpunkt seines azimutalen Zielendes eine größere azimutale Trefferzahl aufweist als die jeweils benachbarten Entfernungskanäle, und die Schaltung bei positivem Korrelationsergebnis ein Signal abgibt, das den betreffenden Entfernungskanal (K) als radiale Zielmitte kennzeichnet.

2. Puls-Radarempfänger nach Anspruch 1, dadurch gekennzeichnet, daß bei Korrelation eines Zieles mit dem vorgegebenen Normziel die Ausgabe der Zielmitte (X) in der Entfernung durch einen Impuls mit der Dauer eines Entfernungskanals in einer Periode der Pulsfolgefrequenz erfolgt.

3. Puls-Radarempfänger nach Anspruch 1 oder 2, dadurch gekennzeichnet, daß der zum Zeitpunkt des Entfernungs-Mittenimpulses vorliegende Zählerstand eines vom Kanaltakt getriggerten Entfernungszählers die Zielentfernung darstellt.

4. Puls-Radarempfänger nach einem der vorhergehenden Ansprüche, dadurch gekennzeichnet, daß der Zielmittenimpuls für die Entfernung mit dem Zielendeimpuls im Azimut verknüpft ist.

5. Puls-Radarempfänger nach einem der vorhergehenden Ansprüche, dadurch gekennzeichnet, daß die Zielmittenbestimmung im Azimut durch Bildung des arithmetischen Mittels des Anfangs- und Endwinkels eines Zielechos erfolgt.

6. Puls-Radarempfänger nach einem der vorhergehenden Ansprüche, dadurch gekennzeichnet, daß in jedem Entfernungskanal und bei jeder Periode der Pulsfolgefrequenz eine von der Breite des Zieles im Azimut abhängige Zahlengröße als Zählerstand vorliegt.

7. Puls-Radarempfänger nach einem der vorhergehenden Ansprüche, dadurch gekennzeichnet, daß die Zielmitte im Azimut als n-Bit-Parallelwort ausgegeben wird.

8. Puls-Radarempfänger nach einem der Ansprüche 1 bis 4, dadurch gekennzeichnet, daß die Zielmitte (X) in der Entfernung als m-Bit-Parallelwort ausgegeben wird.

## Claims

1. A pulse radar receiver comprising a circuit (11) for the digital determination of target centre distance and angle (azimuth) from echo signals, characterised in that the echo signals, available as binary signals in a specific distance channel at the output of a video threshold (10) are correlated with a standard target in order to determine the target centre (X) in terms of distance whilst interrogatting the azimuthal number of hits $(Z_{K-1}, Z_{K+2})$ in two adjacent distance channels $(K-1, K+1)$ at the time of the azimuthal target end in the respective distance channel (K), which standard target is formed by three consecutive distance channels, the central distance channel of which has a greater number of azimuthal hits at the time of its target end than the respectivelyadjacent distance channels, and that in the event of a positive correlation result the circuit transmits a signal which marks the respective distance channel (K) as a radial target centre.

2. A pulse radar receiver as claimed in Claim 1, characterised in that the emission of the target centre (X) in terms of distance is effected by a pulse with the duration of a distance channel in a period of the pulse train frequency when a target is correlated with the predetermined standard target.

3. A pulse radar receiver as claimed in Claim 1 or 2, characterised in that the count of a distance counter present at the time of the distance centre pulse, triggered by the channel clock pulse, represents the target distance.

4. A pulse radar receiver as claimed in one of the preceding Claims, characterised in that the target centre pulse for distance is coupled to the target end pulse in azimuth.

5. A pulse radar receiver as claimed in one of the preceding Claims, characterised in that the determination of the target centre in azimuth is carried out by forming the arithmetic means of the initial and end angle of a target echo.

6. A pulse radar receiver as claimed in one of the preceding Claims, characterised in that in each distance channel and in each period of the pulse train frequency, a numerical quantity dependent upon the width of the target in the azimuth is present as a count.

7. A pulse radar receiver as claimed in one of the preceding Claims, characterised in that the target centre in terms of azimuth is emitted as an n-bit parallel word.

8. A pulse radar receiver as claimed in one of Claims 1 to 4, characterised in that the target centre (X) in terms of distance is emitted as an m-bit parallel word.

## Revendications

1. Récepteur radar à impulsions comportant un circuit (11) permettant la détermination numérique du centre de la cible du point de vue distance et angle (azimut) à partir de signaux d'échos, caractérisé en ce que pour la détermination (X) du centre de la cible en distance, moyennant l'interrogation, effectuée à l'instant de la fin azimutale de la cible dans le canal de distance (K) concerné, du nombre $(Z_{K-1}, Z_{K+1})$ azimutal de coups au but réalisé par les impulsions radar dans les deux canaux de distance voisins $(K-1, K+1)$, des signaux d'échos, qui sont disponibles à la sortie d'un dispositif (10) de seuil vidéo sous la forme d'un signal binaire dans un canal de distance déterminé, sont corrélés à une cible normalisée qui est formée par trois canaux de distance successifs, parmi lesquels le canal intermédiaire de distance comporte, à l'instant de sa fin de cible azimutale, un nombre azimutal de coups au but, plus important que les canaux de distance respectivement voisins, et que dans le cas d'un résultat positif de corrélation, le circuit délivre un signal qui caractérise le canal considéré de distance (K) en tant que centre radial de la cible.

2. Emetteur radar à impulsions suivant la revendication 1, caractérisé par le fait que dans le cas de la corrélation d'une cible avec la cible normalisée prédéterminée, l'indication de la distance du centre (X) de la cible est réalisée au moyen d'une impulsion possédant la durée d'un canal de réception pendant une période de la fréquence de récurrence des impulsions.

3. Récepteur-radar à impulsions suivant la revendication 1 ou 2, caractérisé par le fait que l'état de comptage, présent à l'instant de l'apparition de l'impulsion de distance correspondant au centre, d'un compteur de distance déclenché par la cadence du canal représente la distance de la cible.

4. Récepteur radar à impulsions suivant l'une des revendications précédentes, caractérisé par le fait que l'impulsion du centre de la cible pour la distance est combinée à l'impulsion de la fin de la cible en azimut.

5. Récepteur radar à impulsions suivant l'une des revendications précédentes, caractérisé par le fait que la détermination du centre de la cible en azimut est réalisée par formation de la moyenne arithmétique de l'angle de début et de l'angle de fin d'un écho de la cible.

6. Récepteur radar à impulsions suivant l'une des revendications précédentes, caractérisé par le fait que pendant chaque canal de distance et pendant chaque période de la fréquence de récurrence des impulsions, une grandeur chiffrée, dépendant de la largeur de la cible en azimut, est présente en tant qu'état du compteur.

7. Récepteur radar à impulsions suivant l'une des revendications précédentes, caractérisé par le fait que le centre de la cible est déterminé en azimut sous la forme d'un mot parallèle à n bits.

8. Récepteur radar à impulsions suivant l'une des revendications 1 à 4, caractérisé par le fait que le centre (X) de la cible est déterminé en distance sous la forme d'un mot parallèle à m bits.

# FIG 1

Normziel

K+1

Entfernungskanal K

K-1

Zielmittenkanal
in der Entfernung

# FIG 2

zum Rechner

# FIG 3

vom Zähler

$Z_{K+1}$ $n$ SR1 $n$ $Z_K$ SR2 $Z_{K-1}$

$Z_{K+1} \leq Z_K$ $Z_K > Z_{K-1}$

$Z_{K+1}$ $Z_K$ $Z_K$ $Z_{K-1}$

VS1 VS2

G1

G2

Zielende (K)

## FIG 4

## FIG 5

## FIG 6

## FIG 7